# EUROPÄISCHE PATENTANMELDUNG

(11) **EP 4 428 012 A1**
(43) Veröffentlichungstag der Anmeldung: **11.09.2024**
(21) Anmeldenummer: 23213441.1
(22) Anmeldetag: 30.11.2023
(51) Int. Cl.: B62D 21/11, B60K 5/12

(54) **ANORDNUNG ZUR LAGERUNG EINES ANTRIEBSAGGREGATS EINES KRAFTFAHRZEUGS SOWIE KRAFTFAHRZEUG**

(30) Priorität: 07.03.2023 DE 102023105652
(71) Anmelder: AUDI AG, 85057 Ingolstadt (DE)
(72) Erfinder: Albl, Sebastian, 01689 Weinböhla (DE); Bujak, Marek, 91809 Wellheim (DE); Frensch, Hans Peter, 85055 Ingolstadt (DE); Gruber, Werner, 85117 Eitensheim (DE); Hölzl, Andreas, 85402 Kranzberg (DE); Kramer, Tobias, 85134 Stammham (DE); Laurijssen, Daniel, 85051 Ingolstadt (DE); Schantl, Gilbert, 80802 München (DE); Scheiblecker, Sebastian, 93358 Train (DE); Schroeder, Richard, 85055 Ingolstadt (DE); Steigerwald, Alexander, 91177 Thalmässing (DE); Swierstra, Nanne, 85092 Kösching (DE)

(57) **Zusammenfassung**

Die Erfindung betrifft eine Anordnung zur Lagerung eines Antriebsaggregats eines Kraftfahrzeugs, umfassend einen am Kraftfahrzeug befestigen Hilfsrahmen (10), mit in Fahrzeuglängs- und Fahrzeugquerrichtung (FL, FQ) ausgerichteten Trägern (12-1, 12-2, 14-1, 14-2), zumindest eine Aggregatstütze (18-1, 18-2), die mit dem Antriebsaggregat fest verbunden ist und die eine Lageraufnahmeöffnung aufweist, sowie ein Gummi-Metall-Lager (20), das eine Lageraußenhülse (20-1), einen Lagerkern (20-2) sowie einen zwischen Lageraußenhülse (20-1) und Lagerkern (20-2) angeordneten Elastomerkörper (20-3) umfasst, wobei die Lageraußenhülse (20-1) des Gummi-Metall-Lagers (20) in der Lageraufnahmeöffnung der Aggregatstütze (18-1, 18-2) gehalten und der Lagerkern (20-2) des Gummi-Metall-Lagers (20) mittels eines Schraubbolzens (24) hilfsrahmenseitig befestigt ist. Die Erfindung zeichnet sich dadurch aus, dass die Lageraufnahmeöffnung eine axiale Anschlagfläche (22) für das Gummi-Metall-Lagers (20) aufweisend ausgebildet ist und dass ein Träger (12-1, 12-2, 14-1, 14-2) des Hilfsrahmens (10) eine Durchgangsbohrung (26) aufweist, durch die der Schraubbolzen (24) hindurchfassend, den Lagerkern (20-2) hilfsrahmenseitig befestigend angeordnet ist.

## Beschreibung

Die Erfindung betrifft eine Anordnung zur Lagerung eines Antriebsaggregats eines Kraftfahrzeugs gemäß der im Oberbegriff des Patentanspruches 1 angegebenen Art sowie ein Kraftfahrzeug gemäß Patentanspruch 10.

Die DE 10 2017 214 955 A1 offenbart eine Aggregatlagerung für ein zweispuriges Fahrzeug, gemäß der ein Antriebsaggregat über eine Aggregatstütze mittels eines Gummi-Metall-Lagers an einer Adapterkonsole eines Achsträger gelagert ist. Hierzu ist das Gummi-Metall-Lager, das eine radial äußere Lagerhülse, einen radial inneren Lagerkern sowie einen zwischengeordneten Elastomerkörper aufweist, über seine radial äußere Lagerhülse verpresst in einem Lagerauge der Aggregatstütze gehalten und der Lagerkern ist mittels eines Schraubbolzens zwischen Konsolenflügel der Adapterkonsole fest gespannt. Ein bekanntes Problem dabei ist, dass aufgrund der Adapterkonsole verhältnismäßig viel Bauraum benötigt wird und dass die Adapterkonsole zu zusätzlichen Bauteilgewicht beträgt.

Der Erfindung liegt die Aufgabe zugrunde eine Anordnung zur Lagerung eines Antriebsaggregats, insbesondere eines Elektromotors, eines Kraftfahrzeugs gemäß der im Oberbegriff des Patentanspruches 1 angegebenen Art derart weiterzubilden, dass die Anordnung weniger Bauraum benötigt und gewichtsgünstiger baut.

Diese Aufgabe wird durch die kennzeichnenden Merkmale des Patentanspruches 1 in Verbindung mit seinen Oberbegriffsmerkmalen gelöst.

Die Unteransprüche 2 bis 9 stellen vorteilhafte Weiterbildungen der Anordnung zur Lagerung eines Antriebsaggregats eines Kraftfahrzeugs dar.

In bekannter Art und Weise umfasst die Anordnung zur Lagerung eines Antriebsaggregats, insbesondere eines Elektromotors, einen am Kraftfahrzeug befestigen Hilfsrahmen, der in Fahrzeuglängsrichtung, FL, und Fahrzeugquerrichtung, FQ, ausgerichtete Träger aufweist, zumindest eine mit dem Antriebsaggregat fest verbundene, eine Lageraufnahmeöffnung aufweisende Aggregatstütze, sowie ein Gummi-Metall-Lager, das eine Lageraußenhülse, einen Lagerkern sowie einen zwischen Lageraußenhülse und Lagerkern angeordneten Elastomerkörper umfasst. Während die Lageraußenhülse des Gummi-Metall-Lagers in der Lageraufnahme der Aggregatstütze gehalten ist, ist der Lagerkern des Gummi-Metall-Lagers mittels eines Schraubbolzens hilfsrahmenseitig befestigt.

Die oben und im folgenden verwendeten Richtungsangaben beziehen sich auf ein fahrzeugfestes Koordinatensystem, dessen x-Achse entlang der Fahrzeuglängsachse FL verläuft und in Fahrtrichtung ( = Vorwärtsfahrtrichtung) zeigt, dessen y-Achse entlang der Fahrzeugquerachse FQ verläuft und - entsprechend - nach links zeigt und dessen z-Achse entlang der Fahrzeughochachse FH nach oben ausgerichtet ist.

Lediglich ergänzend wird zudem noch darauf hingewiesen, dass die Angaben "axial" bzw. "radial" sich auf das auf das verbaute Gummi-Metall-Lager beziehen, d.h. die axiale Richtung a entspricht der Längsrichtung des Gummi-Metall-Lagers, entsprechend ist unter radial eine dazu orthogonale Erstreckung zu verstehen.

Erfindungsgemäß ist vorgesehen, dass die aggregatstützseitige Lageraufnahmeöffnung derart ausgebildet ist, dass diese eine axiale Anschlagfläche für das Gummi-Metall-Lager aufweist und dass ein Träger des Hilfsrahmens eine Durchgangsbohrung aufweist, durch die der Schraubbolzen hindurchfassend, den Lagerkern hilfsrahmenseitig befestigend angeordnet ist.

Die erfindungsgemäße Ausgestaltung hat den Effekt, dass der Lagerkern des Gummi-Metall-Lagers zwischen der in der Aggregatstütze ausgebildeten axialen Anschlagfläche und dem die Durchgangsbohrung aufweisenden Träger des Hilfsrahmens verklemmt gehalten ist. D.h., die erfindungsgemäße Anordnung ermöglicht eine Lagerung unter Wegfall von Lagerkonsolen, sodass in vorteilhafter Weise eine kompaktere und leichtere Lagerung ermöglicht ist.

Ein weiterer Vorteil der erfindungsgemäßen Anordnung ist, dass diese nicht nur aufgrund des Wegfalls von Lagerkonsolen leichter und kompakter baut, sondern insbesondere auch, dass die erfindungsgemäße Anordnung nur geringfügige Änderungen am Hilfsrahmendesign, nämlich lediglich das Vorsehen der entsprechend angeordneter Durchgangsbohrungen, erfordert.

Vor allem im Hinblick auf Elektrofahrzeuge erweist sich dies von entscheidenden Vorteil: Elektrofahrzeuge werden oft in einer Heckantriebsvariante und einer Allradvariante angeboten. Die Allradvariante wird dabei durch einen zusätzlichen Elektromotor an der Vorderachse realisiert, der entsprechend entkoppelt an einem Hilfsrahmen zu lagern ist. Da - wie bereits ausgeführt - die erfindungsgemäße Anordnung nur geringfügige Änderungen am Hilfsrahmen erfordert, ist es nunmehr möglich variantenübergreifend einen identische Hilfsrahmen zu verwenden, an den dann - bei Bedarf - also z.B. für die Allradvariante, das zusätzliche Aggregat gelagert wird. Somit ist in vorteilhafter Weise sichergestellt, dass keine Varianz an Hilfsrahmen vorgehalten werden muss.

Vorzugweise weist dabei der die Durchgangsbohrung aufweisende Träger des Hilfsrahmens an seiner dem Gummi-Metall-Lager zugewandten Seite ein Verstärkungselement auf, das eine Austrittsöffnung für den Schraubbolzen aufweist und das eine axiale Anlagefläche für das Gummi-Metall-Lager bildet. Hierdurch ist in vorteilhafter Weise sichergestellt, dass auch hilfsrahmenseitig eine ausreichend große Lager-Anlagefläche zur Verfügung steht.

Eine kostengünstige und wenig Gewicht erfordernde Ausgestaltung sieht dabei vor, dass das Verstärkungselement in Form zumindest eines Blechteils ausgebildet ist, welches stoffschlüssig mit dem Träger verbunden ist.

Zur Erhöhung der hilfsrahmenseitigen Steifigkeit, sieht eine weitere bevorzugte Ausführungsform vor, dass in der Durchgangsbohrung eine Hülse angeordnet ist, die sich in axialer Richtung, d.h. in Längsrichtung des Gummi-Metall-Lagers betrachtet - ausgehend von einer Eintrittsöffnung der Durchgangsbohrung bis zur verstärkungselementseitigen Austrittsöffnung erstreckt.

Vorzugsweise ist die Lageraufnahmeöffnung in der Aggregatstütze in Form eines Sackloches ausgebildet und der Lagerkern weist ein zum Schraubbolzen korrespondierendes Innengewinde zum entsprechenden Einschrauben des Schraubbolzens auf. Neben der geringen Anzahl von Losteilen, erweist sich diese Ausführungsform aufgrund der konstruktiven Einfachheit von Vorteil. Besonders bevorzugt ist dabei die Lageraußenhülse des Gummi-Metall-Lagers verpresst in der als Sackloch ausgebildeten Lageraufnahmeöffnung der Aggregatstütze gehalten.

Eine weitere besonders bevorzugte Ausführungsform der erfindungsgemäßen Anordnung zeichnet sich dadurch aus, dass der die Durchgangsbohrung aufweisende Träger des Hilfsrahmens eine Fügestelle aufweist, über die der Hilfsrahmen am Kraftfahrzeug befestigt ist, wobei die Fügestelle zumindest zwei zueinander beabstandet angeordnete Befestigungselemente aufweist, und dass die Durchgangsbohrung so angeordnet ist, dass diese im Zwischenraum zwischen den beiden Befestigungselementen liegt. Die Anordnung der Durchgangsbohrung zwischen den beiden Befestigungselemente hat den Effekt, dass hierdurch eine besonders steife Anbindung des Lagerkerns an den Träger und damit den Hilfsrahmen gewährleistet ist.

Gemäß einer bevorzugten Ausführungsform handelt es sich bei dem die Durchgangsbohrung aufweisenden Träger des Hilfsrahmens um einen sich in Fahrzeuglängsrichtung FL des Kraftfahrzeugs erstreckenden Längsträger des Hilfsrahmens, der über eine Fügestelle am Kraftfahrzeug befestigt ist. Die Fügestelle umfasst dabei zumindest zwei Befestigungselemente, die in Fahrzeuglängsrichtung FL beabstandet zueinander positioniert sind. Die Durchgangsbohrung ist in Fahrzeugquerrichtung FQ verlaufend ausgerichtet und in Fahrzeuglängsrichtung FL betrachtet zwischen den beiden Befestigungselemente liegend angeordnet.

Die Befestigungselemente sind dabei bevorzugt in Fahrzeughochrichtung FH verlaufend ausgerichtet. Vorzugsweise sind die Befestigungselemente als Schraubbolzen ausgebildet.

Vorzugsweise ist die Aggregatstütze lösbar, beispielsweise mittels Verschrauben, mit dem Antriebsaggregat, insbesondere mit einem Gehäuse des Antriebsaggregat, verbunden. Hierdurch ist in vorteilhafter Weise eine vereinfachte Montage des Antriebsaggregats ermöglicht.

Der Erfindung liegt des Weiteren die Aufgabe zugrunde ein Kraftfahrzeug, umfassend eine Anordnung zur Lagerung eines Antriebsaggregats, derart weiterzubilden, dass eine gewichtsgünstige und steife Anbindung des Antriebsaggregats sichergestellt ist.

Diese Aufgabe wird dadurch gelöst, dass die Anordnung zur Lagerung eines Antriebsaggregats nach einem der Ansprüche 1 bis 9 ausgebildet sind.

Sämtliche Ausführungen zu der erfindungsgemäßen Anordnung zur Lagerung eines Antriebsaggregats lassen sich analog auf das erfindungsgemäße Kraftfahrzeug übertragen, sodass mit diesem auch die zuvor genannten Vorteile erzielt werden.

Weitere Vorteile und Anwendungsmöglichkeiten der Erfindung ergeben sich aus der nachfolgenden Beschreibung in Verbindung mit dem in der Zeichnung dargestellten Ausführungsbeispiel.

In der Zeichnung bedeutet:
- Fig. 1: eine Ansicht schräg von oben auf einen Hilfsrahmen eines Kraftfahrzeugs;
- Fig. 2: eine vergrößerte Draufsicht einer Lagerstelle, über die eine Aggregatstütze am Hilfsrahmen angebunden ist;
- Fig. 3: eine Schnittdarstellung entlang A-A aus Fig. 2, und
- Fig. 4: eine Schnittdarstellung entlang B-B aus Fig. 2.

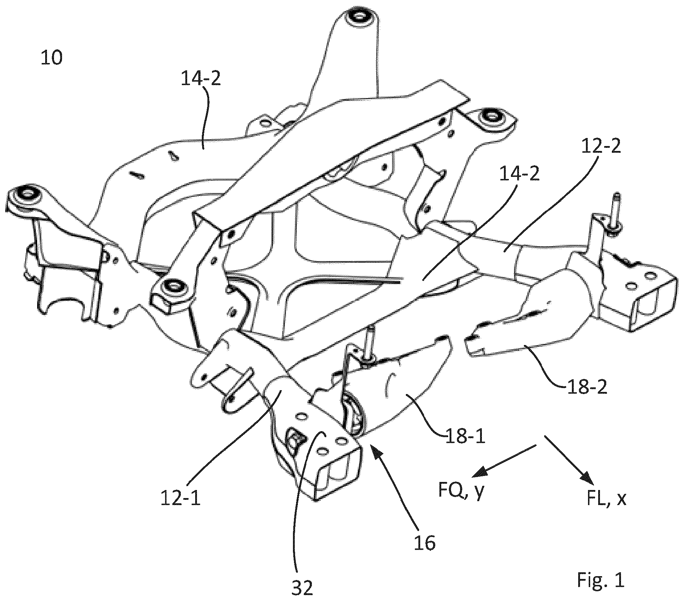

Fig. 1 zeigt einen insgesamt der Bezugsziffer 10 bezeichneten Hilfsrahmen für ein Kraftfahrzeug. Der Hilfsrahmen 10 weist in bekannter Art und Weise zwei in Fahrzeuglängsrichtung FL ausgerichtete Längsträger 12-1, 12-2 sowie zwei die Längsträger 12-1, 12-2 verbindende, in Fahrzeugquerrichtung FQ ausgerichtete Querträger 14-1, 14-2 auf.

Wie Fig. 1 weiter zu entnehmen ist, ist am Längsträger 12-1 über eine insgesamt mit der Bezugsziffer 16 bezeichnete Lagerstelle eine Aggregatstütze 18-1 angebunden, mittels der ein - hier aus Gründen der Übersichtlichkeit nicht dargestelltes - Antriebsaggregat am Hilfsrahmen 10 befestigbar ist. Eine entsprechende Aggregatstütze 18-2 ist am Längsträger 12-2 angebunden. Da die Anbindungsstellen der Aggregatstützen 18-1, 18-2 baugleich ausgebildet sind, beschränkt sich die weitere Beschreibung auf die mit der Bezugsziffer 16 bezeichnete Anbindungsstelle.

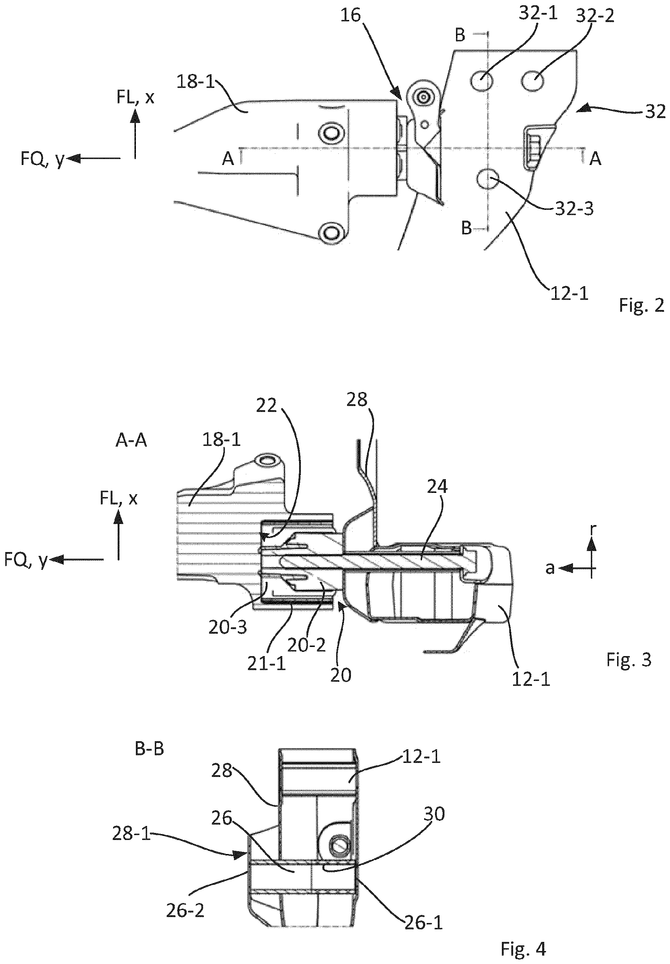

Wie Fig. 2 zeigt, ist die Aggregatstütze 18-1 ausgehend vom zugeordneten Längsträger 12-1 in Fahrzeugquerrichtung FQ nach innen zur Fahrzeugmitte hin verlaufend ausgerichtet.

Die Lagerstelle 16 umfasst ein mit der Bezugsziffer 20 bezeichnetes Gummi-Metall-Lager, das - wie insbesondere aus Fig. 3 ersichtlich - eine Lageraußenhülse 20-1, einen Lagerkern 20-2 sowie einen in radialer Richtung r zwischen Lageraußenring 20-1 und Lagerkern 20-2 angeordneten Elastomerkörper 20-3 aufweist. Das Gummi-Metall-Lager 20 ist dabei über seinen Lageraußenring 20-1 mit der Aggregatstütze 18-1 und seinen Lagerkern 20-2 mit dem Längsträger 12-1 des Hilfsrahmens 10 verbunden.

Wie weiter aus Fig. 3 ersichtlich, ist der Lageraußenring 20-1 des Gummi-Metall-Lagers 20 in einer als Sackloch ausgebildeten Lageraufnahmeöffnung der Aggregatstütze 18-1 angeordnet. Aufgrund der Ausbildung als Sackloch bildet die bodenseitige Endfläche des Sackloches eine axiale Anschlagfläche 22 für das Gummi-Metall-Lager 20. Bevorzugt ist der Lageraußenring 20-1 verpresst und damit radial und axial fest in der als Sackloch ausgebildeten aggregatstützseitigen Lageraufnahmeöffnung gehalten.

Die Befestigung des Lagerkerns 20-2 am Längsträger 12-1 des Hilfsrahmens 10 erfolgt mittels eines Schraubbolzens 24. Hierzu weist der Lagerkern 20-1 ein zum Außengewinde des Schraubbolzens 24 korrespondierendes Innengewinde auf und der Längsträger 12-1 ist mit einer in Fahrzeugquerrichtung FQ ausgerichteten Durchgangsbohrung 26, vgl. Fig. 4, versehen, durch die der Schraubbolzen 24 hindurchfassend, mit dem Lagerkern 20-1 verschraubbar ist.

Um auch hilfsrahmenseitig eine ausreichend axiale Abstützung des Lagerkerns 20-2 sicherzustellen, weist der Längsträger 12-1 an seiner dem Lagerkern 20-2 zugewandten Seite ein Verstärkungselement 28, welches in Bezug auf den Lagerkern 20-2 eine axiale Anlagefläche 28-1 bildet, vgl. Fig. 4. Vorliegend ist das Verstärkungselement 28 in Form zweier Blechschalen ausgebildet, die stoffschlüssig mit dem Längsträger 12- 1 verbunden sind.

Im verbauten Zustand ist somit das Gummi-Metall-Lager 20 in Fahrzeugquerrichtung FQ bzw. in axialer Richtung a betrachtet zwischen der in der Lageraufnahmeöffnung ausgebildeten axialen Anschlagfläche 22 und der durch das Verstärkungselement 28 ausgebildeten, längsträgerseitigen axialen Anlagefläche 28-1 positioniert und mittels des Schraubbolzens 24 verspannt gehalten.

Um zudem eine ausreichende längsträgerseitige Steifigkeit zu gewährleisten, ist - wie Fig. 3 und insbesondere Fig. 4 zu entnehmen ist - in der Durchgangsbohrung 26 eine Hülse 30 angeordnet, die sich die sich in axialer Richtung a ausgehend von einer Eintrittsöffnung 26-1 der Durchgangsbohrung 26 bis zur verstärkungselementseitigen Austrittsöffnung 26-2 erstreckt.

Wie aus Fig. 1 ersichtlich, weist der Hilfsrahmen 10 mehrere Fügestellen 32 auf, über die der Hilfsrahmen 10 am Kraftfahrzeug befestigbar ist. Der Übersichtlichkeit halber ist lediglich eine der Fügestellen, nämlich die am Längsträger 12-1 ausgebildete, im Bereich der Lagerstelle 16 positionierte Fügestelle mit dem Bezugszeichen 32 bezeichnet.

Wie Fig. 1 und Fig. 2 zeigen, weist die Fügestelle 32 drei in Fahrzeughochrichtung FH ausgerichtete Lagerbohrungen 32-1, 32-2 und 32-3 auf, durch die entsprechende Befestigungselemente, wie beispielsweise Schraubbolzen, zum Verschrauben mit der Karosserie hindurchführbar sind.

Eine der Lagerbohrungen, vorliegend die mit der Bezugsziffer 32-3 bezeichnete, ist dabei in Fahrzeuglängsrichtung FL betrachtet beabstandet zu den Lagerbohrungen 32-1 und 32-2 angeordnet. Um eine besonders steife Anbindung des Lagerkerns 20-2 an den Längsträger 12-1 und damit an den Hilfsrahmen 10 zu gewährleisten ist - wie Fig. 2 zu entnehmen ist - die in Fahrzeugquerrichtung FQ ausgerichtete Durchgangsbohrung 26 und damit der den Lagerkern 20-2 am Längsträger 12-1 befestigende Schraubbolzen 24 in Fahrzeuglängsrichtung FL betrachtet zwischen der Lagerbohrung 32-3 und den Lagerbohrungen 32-1, 32-2 angeordnet.

## Patentansprüche

1. Anordnung zur Lagerung eines Antriebsaggregats eines Kraftfahrzeugs, umfassend einen am Kraftfahrzeug befestigen Hilfsrahmen (10), mit in Fahrzeuglängs- und Fahrzeugquerrichtung (FL, FQ) ausgerichteten Trägern (12-1, 12-2, 14-1, 14-2), zumindest eine Aggregatstütze (18-1, 18-2), die mit dem Antriebsaggregat fest verbunden ist und die eine Lageraufnahmeöffnung aufweist, sowie ein Gummi-Metall-Lager (20), das eine Lageraußenhülse (20-1), einen Lagerkern (20-2) sowie einen zwischen Lageraußenhülse (20-1) und Lagerkern (20-2) angeordneten Elastomerkörper (20-3) umfasst, wobei die Lageraußenhülse (20-1) des Gummi-Metall-Lagers (20) in der Lageraufnahmeöffnung der Aggregatstütze (18-1, 18-2) gehalten und der Lagerkern (20-2) des Gummi-Metall-Lagers (20) mittels eines Schraubbolzens (24) hilfsrahmenseitig befestigt ist,
**dadurch gekennzeichnet, dass**
die Lageraufnahmeöffnung eine axiale Anschlagfläche (22) für das Gummi-Metall-Lagers (20) aufweisend ausgebildet ist und dass ein Träger (12-1, 12-2, 14-1, 14-2) des Hilfsrahmens (10) eine Durchgangsbohrung (26) aufweist, durch die der Schraubbolzen (24) hindurchfassend, den Lagerkern (20-2) hilfsrahmenseitig befestigend angeordnet ist.

2. Anordnung nach Anspruch 1
**dadurch gekennzeichnet, dass**
der die Durchgangsbohrung (26) aufweisende Träger (12-1, 12-2, 14-1, 14-2) an seiner dem Gummi-Metall-Lager (20) zugewandten Seite ein Verstärkungselement (28) aufweist, das eine Austrittsöffnung (26-2) für den Schraubbolzen (24) aufweist und das eine axiale Anlagefläche (28-1) für das Gummi-Metall-Lager (20) bildet.

3. Anordnung nach Anspruch 2,
**dadurch gekennzeichnet, dass**
in der Durchgangsbohrung (26) eine Hülse (30) angeordnet ist, die sich in axialer Richtung (a) ausgehend von einer Eintrittsöffnung (26-1) der Durchgangsbohrung (26) bis zur verstärkungselementseitigen Austrittsöffnung (26-2) erstreckt.

4. Anordnung nach Anspruch 2 oder 3
**dadurch gekennzeichnet, dass**
das Verstärkungselement (28) in Form zumindest eines Blechteils ausgebildet ist, welches stoffschlüssig mit dem Träger (12-1, 12-2, 14-1, 14-2) verbunden ist.

5. Anordnung () nach einem der Ansprüche 1 bis 4,
**dadurch gekennzeichnet, dass**
die Lageraufnahmeöffnung in Form eines Sackloches ausgebildet ist und dass der Lagerkern (20-2) ein zum Schraubbolzen (24) korrespondierendes Innengewinde zum Einschrauben des Schraubbolzens (24) aufweist.

6. Anordnung nach Anspruch 1,
**dadurch gekennzeichnet, dass**
der die Durchgangsbohrung (26) aufweisende Träger (12-1, 12-2, 14-1, 14-2) des Hilfsrahmens (10) eine Fügestelle (32) aufweist, über die der Hilfsrahmen (10) am Kraftfahrzeug befestigt ist, wobei die Fügestelle (32) zumindest zwei zueinander beabstandet angeordnete Befestigungselemente aufweist, und dass die Durchgangsbohrung (26) so angeordnet ist, dass diese im Zwischenraum zwischen den beiden Befestigungselementen liegt.

7. Anordnung nach Anspruch 6,
**dadurch gekennzeichnet, dass**
der die Durchgangsbohrung (26) aufweisende Träger des Hilfsrahmens (10) ein Längsträger (12-1, 12-2) des Hilfsrahmens ist (10), und dass die Fügestelle (32) zwei in Fahrzeuglängsrichtung (FL) betrachtet beabstandete Befestigungselemente umfasst, und dass die Durchgangsbohrung (26) in Fahrzeugquerrichtung (FQ) ausgerichtet verlaufend ist und in Fahrzeuglängsrichtung (FL) betrachtete zwischen den beiden Befestigungselemente liegend angeordnet ist.

8. Anordnung nach Anspruch 7,
**dadurch gekennzeichnet, dass**
die beiden Befestigungselemente in Fahrzeughochrichtung (FH) verlaufend ausgerichtet sind.

9. Anordnung nach einem der vorgenannten Ansprüche,
**dadurch gekennzeichnet, dass**
die Aggregatstütze (18-1, 18-2) lösbar mit dem Antriebsaggregat verbunden ist.

10. Kraftfahrzeug, umfassend eine Anordnung zur Lagerung eines Antriebsaggregats,
**dadurch gekennzeichnet, dass**
die Anordnung nach einem der Ansprüche 1 bis 9 ausgebildet ist.
